(19) Europäisches Patentamt
European Patent Office
Office européen des brevets

(11) **EP 2 695 720 A1**

(12) **EUROPEAN PATENT APPLICATION**
published in accordance with Art. 153(4) EPC

(43) Date of publication:
**12.02.2014 Bulletin 2014/07**

(51) Int Cl.:
*B29C 47/06* [(2006.01)]  *B32B 27/32* [(2006.01)]
*B29K 23/00* [(2006.01)]  *B29L 7/00* [(2006.01)]
*B29L 9/00* [(2006.01)]

(21) Application number: **12768678.0**

(22) Date of filing: **27.03.2012**

(86) International application number:
**PCT/JP2012/057970**

(87) International publication number:
**WO 2012/137632 (11.10.2012 Gazette 2012/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.04.2011 JP 2011082269**

(71) Applicant: **Idemitsu Unitech Co., Ltd.
Tokyo 108-0014 (JP)**

(72) Inventor: **KONDO, Kaname
Sodegaura-shi
Chiba 299-0205 (JP)**

(74) Representative: **Smee, Anthony James Michael
Gill Jennings & Every LLP
The Broadgate Tower
20 Primrose Street
London EC2A 2ES (GB)**

(54) **METHOD FOR PRODUCING TRANSPARENT RECYCLED SHEET, AND TRANSPARENT RECYCLED SHEET**

(57)    A method of manufacturing a transparent recycled sheet using a multilayer sheet as a recycled resin, the multilayer sheet including a base layer and a surface layer being layered on each other and each including a crystalline resin, includes: melt-extruding a mixed resin into a raw sheet, the mixed resin being prepared by mixing a virgin resin including the crystalline resin, the recycled resin and a metallocene ethylene-alpha-olefin copolymer having a melt flow rate of 0.5 g/10 min to 6 g/10 min; and cooling the raw sheet.

FIG.2

Printed by Jouve, 75001 PARIS (FR)

**Description**

TECHNICAL FIELD

The present invention relates to a method of manufacturing a transparent recycled sheet and to a transparent recycled sheet.

BACKGROUND ART

When a crystalline resin typified by polypropylene is processed to form a film by a typical film formation method, the obtained film is opaque due to high crystallinity (e.g., a crystallinity degree, a crystallization speed, and a spherulite size) of the crystalline resin. In order to obtain a transparent film or sheet of the crystalline resin, as disclosed in Patent Literature 1, a typical polymer design technique of blending an additive (a nucleating agent) is taken so that a number of fine crystals are made to suppress growth of spherulites. Another way to obtain transparency is exemplified by a rapid cooling using a belt process as disclosed in Patent Literature 2. In the rapid cooling using the belt process, the transparency is given through a sheet formation process in which polypropylene in a melted state is interposed and pressed between a belt and a roller which are kept at lower temperatures and is rapidly cooled. By rapidly cooling polypropylene in a melted state, growth of crystals is suppressed to achieve a low crystallization and fine-spherulite formation. Thus, even though a nucleating agent is not blended, the obtained sheet exhibits a higher transparency than the transparency of a sheet manufactured with a nucleating agent.

CITATION LIST

PATENT LITERATURE(S)

| Patent Literature 1 | Japanese Patent No. 3725955 |
| Patent Literature 2 | Japanese Patent No. 4237275 |

SUMMARY OF THE INVENTION

PROBLEMS TO BE SOLVED BY THE INVENTION

A sheet manufacturing process makes a large amount of waste such as so-called manufacturing loss and slit loss. Since disposal of such waste significantly increases a manufacturing cost, the waste is frequently recycled. Specifically, the waste is crushed or torn into fluff by an appropriate method and mixed with a virgin resin (i.e., a raw material) for manufacturing a sheet. However, the recycle of the waste lowers the transparency of even the sheet with a high transparency as disclosed in Patent Literature 1 or 2. Likewise, a recycled sheet manufactured using a multilayer sheet including a plurality of different layers as a recycled resin (a recovered material) is likely to have a lowered transparency. In particular, when a multilayer sheet whose base layer and surface layer are both made of a crystalline resin is used as a recycled resin, the manufactured recycled sheet has a significantly lowered transparency.

An object of the invention are to provide a method of manufacturing a transparent recycled sheet whose transparency can be maintained even when a multilayer sheet whose base layer and surface layer are both made of a crystalline resin is used as a recycled resin, and a transparent recycled sheet.

MEANS FOR SOLVING THE PROBLEMS

When a sheet manufactured through an extrusion film-forming and rapid cooling process based on a belt process and/or a water-cooling method is observed with a polarizing microscope, a phase-contrast microscope or the like, a large number of spherulites are found in the vicinity of a surface of the sheet. The spherulites are one of the factors that deteriorate the transparency and thus the transparency is expected to be further enhanced by suppressing generation of the spherulites. Additionally, it has also been found that adjustment of a stress applied for extruding a resin affects the spherulites resulting from the subsequent rapid cooling.

When a multilayer sheet including a base layer and a surface layer is used, the stress applied for extruding a resin can be adjusted by laminating the surface layer having a viscosity lower than that of the base layer on a contact surface to a die. However, when the sheet is recycled, the transparency is significantly lowered because of a difference in viscosity between the base layer and the surface layer. As a result of intense study of the inventor, it has been found that the transparency of even a recycled sheet containing a recovered material originating from a multilayer sheet can be maintained by controlling growth of spherulites in a recovered layer that will be recycled. The invention has been made based on the finding above.

Specifically, according to the invention, it is possible to provide a method of manufacturing a transparent recycled sheet as described below and to provide a transparent recycled sheet as described below.

(1) A method of manufacturing a transparent recycled sheet using a multilayer sheet as a recycled resin, the multilayer sheet including a base layer and a surface layer being layered on each other and each including a crystalline resin, the method including: melt-extruding a mixed resin into a raw sheet, the mixed resin being prepared by mixing a virgin resin including the crystalline resin, the recycled resin and a metallocene ethylene-alpha-olefin copolymer having a melt flow rate of 0.5 g/10 min to 6 g/10 min; and cooling the raw sheet.

(2) In the above method, it is preferable that the multilayer sheet is provided by layering the base layer and the surface layer, the base layer is formed of the virgin resin including the crystalline resin, and the surface layer is provided on at least one surface of the base layer and is formed of the virgin resin including the crystalline resin having a larger melt flow rate and a shorter relaxation time than a melt flow rate and a relaxation time of the crystalline resin of the virgin resin of the base layer.

(3) In the above method, it is preferable that the transparent recycled sheet is used to form the base layer and the surface layer including the crystalline resin is layered on the base layer.

(4) It is preferable that the above method further includes thermally treating the raw sheet at a temperature in a range from a crystallization temperature to a melting point.

(5) In the above method, it is preferable that a content of the metallocene ethylene-alpha-olefin copolymer in the raw sheet is in a range from 0.1 mass% to 20 mass% of the raw sheet.

(6) In the above method, it is preferable that the recycled resin in the raw sheet includes the crystalline resin originating from the surface layer of the multilayer sheet at a content of 0.1 mass% or more of the raw sheet.

(7) In the above method, it is preferable that the mixed resin is prepared by dry-blending a virgin resin pellet of the crystalline resin, the recycled resin provided by tearing the multilayer sheet into fluff, and a virgin resin pellet of the metallocene ethylene-alpha-olefin copolymer.

(8) In the above method, it is preferable that the crystalline resin includes a propylene resin.

(9) In the above method, it is preferable that the metallocene ethylene-alpha-olefin copolymer includes a linear low-density polyethylene.

(10) A transparent recycled sheet including: a multilayer sheet in a form of a recycled resin, the multilayer sheet including a base layer and a surface layer each including a crystalline resin; a virgin resin including a crystalline resin; and a metallocene ethylene-alpha-olefin copolymer having a melt flow rate in a range from 0.5 g/10 min to 6 g/10 min.

(11) In the above transparent recycled sheet, it is preferable that the multilayer sheet is provided by layering the base layer and the surface layer, the base layer is formed of the virgin resin including the crystalline resin, and the surface layer is provided on at least one surface of the base layer and is formed of the virgin resin including the crystalline resin having a larger melt flow rate and a shorter relaxation time than a melt flow rate and a relaxation time of the crystalline resin of the virgin resin of the base layer.

(12) In the above transparent recycled sheet, it is preferable that the transparent recycled sheet is used to form the base layer, and the surface layer including the crystalline resin is layered on the base layer.

According to the aspect of the invention, a multilayer sheet is made into a recycled resin (a recovered material) and mixed in a virgin resin along with a specific metallocene ethylene-alpha-olefin copolymer prepared using a metallocene catalyst.

With this arrangement, even when the recycled resin is made from a sheet including a base layer and a surface layer each containing a crystalline resin, generation of huge spherulites of the crystalline resin can be prevented with the assistance of the metallocene ethylene-alpha-olefin copolymer. In particular, even when the surface layer of the multilayer sheet is formed of a crystalline resin having a larger MFR and a shorter relaxation time than those of a crystalline resin in the virgin resin for forming the base layer and thus huge spherulites originating from the surface layer are likely to be generated, the above arrangement contributes to efficiently prevent generation of huge spherulites. As a result, since light is less scattered due to the spherulites, the transparency of even the recycled sheet can be maintained.

BRIEF DESCRIPTION OF DRAWINGS

Fig. 1 schematically shows a manufacturing device of a transparent recycled sheet according to an exemplary embodiment of the invention.
Fig. 2 schematically shows a drawing section of the manufacturing device.

DESCRIPTION OF EMBODIMENT(S)

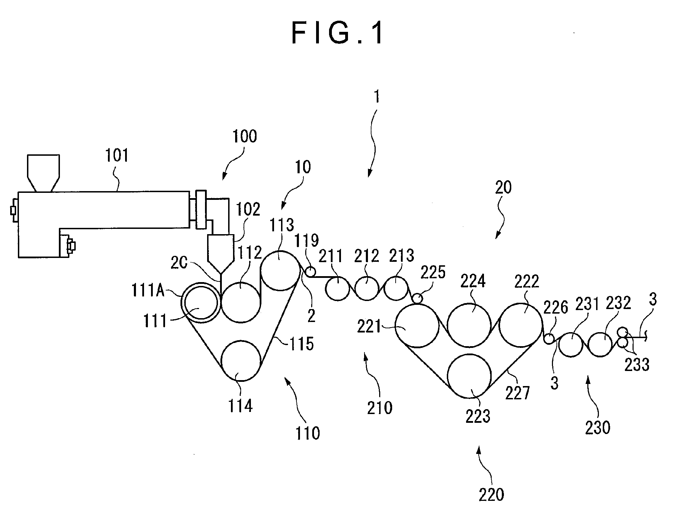

A manufacturing method of a transparent recycled sheet according to an exemplary embodiment of the invention will be described below with reference to Fig. 1.

In this exemplary embodiment, a propylene resin will be described as an example of a crystalline resin used to form a transparent recycled sheet but the scope of the invention is not limited thereto. For instance, a crystalline resin other than propylene resins can be used.

Arrangement of Manufacturing Device

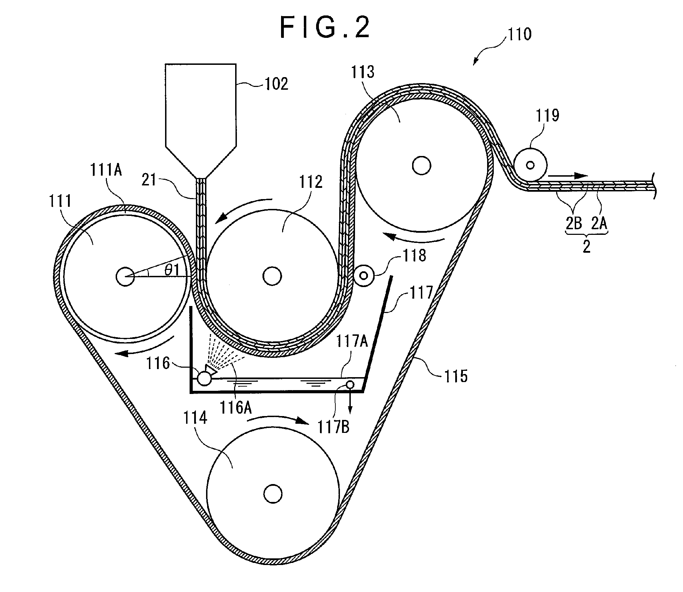

As shown in Fig. 1, a manufacturing device 1 includes: a raw sheet molding machine 10 that extrudes a material resin into a sheet after melting and kneading and rapidly cools the material resin; and thermal treatment equipment 20 that thermally treats a raw sheet 2 (see Fig. 2) produced by the raw sheet molding machine 10 to produce a transparent recycled sheet 3.

The raw sheet 2 has a trilaminar structure of two components in which surface layers 2B are provided on both sides of a sheet-shaped base layer 2A as shown in Fig. 2 (described in detail later).

In the exemplary embodiment, the raw sheet 2 and/or the transparent recycled sheet 3 is recycled to be used as a recycled resin.

The raw sheet molding machine 10 includes a T-die extruder 100 and a cooling press machine 110. The T-die extruder 100 includes an extruder 101 and a T-die 102.

A single screw extruder, a multi-screw extruder and the like are usable as the extruder 101. The extruder 101 includes a plurality of extruders associated with the base layer 2A and the surface layers 2B of the raw sheet 2, respectively.

The T-die 102 is detachably attached to an end of each of the extruders 101. The T-die 102 molds a melted resin 2C extruded from the extruder 101 associated therewith such that the melted resin 2C is layered on other melted resins 2C into a sheet. Examples of the T-die 102 include a coat hanger die and a slot die. Any kind of dies other than the coat hanger die and slot die can be used as the T-die 102 as long as the T-die 102 is capable of forming a multilayer sheet. The melted material resin extruded from the extruder is layered on other extruded material resins with the use of, for instance, a feed block or a multi-manifold die.

The melted resin 2C, which is extruded and layered on other melted resins 2C into a sheet through the T-die 102, is pressed and shaped into the raw sheet 2 through the cooling press machine 110 of the raw sheet molding machine 10 while being cooled. As shown in Figs. 1 and 2, the cooling press machine 110 includes a first cooling roller 111, a second cooling roller 112, a third cooling roller 113, a fourth cooling roller 114, a cooling endless belt 115, a cooling-water-spraying nozzle 116, a water bath 117, a water absorption roller 118 and a peeling roller 119.

The first cooling roller 111, the second cooling roller 112, the third cooling roller 113 and the fourth cooling roller 114 are rotatably supported metallic rollers of a material with excellent thermal conductivity. A rotary shaft of at least one of the first cooling roller 111, the third cooling roller 113 and the fourth cooling roller 114 is connected to a rotary drive mechanism (not shown) to be rotated in accordance with the drive of the rotary drive mechanism.

It should be noted that the first cooling roller 111, the second cooling roller 112, the third cooling roller 113 and the fourth cooling roller 114 are preferably large in diameter in view of durability of the cooling endless belt 115. Practically, it is preferable that the diameter of the cooling rollers is designed to be in a range from 100 mm to 1500 mm.

The circumference of the first cooling roller 111 is covered with an elastic member 111A. Examples of the material of the elastic member include nitrile-butadiene rubber (NBR), fluorinated rubber, polysiloxane rubber and EPDM (ethylene propylene diene monomer).

In order to provide a suitable face pressure by an elastic deformation, the elastic member 111A preferably has a hardness of 80 degrees or less (measured by a method in accordance with JIS K6301A) and a thickness of about 10 mm.

The second cooling roller 112 is a metallic roller having a mirror-finished surface (a mirror-finished cooling roller) of a surface roughness (Rmax: based on "Definition and Designation of Surface Roughness" in accordance with JIS B 0601) of 0.3 $\mu$m or less. The second cooling roller 112 houses therein a cooler such as a water-cooling cooler (not shown) for adjusting a temperature of the surface. When the surface roughness (Rmax) of the second cooling roller 112 exceeds 0.3 $\mu$m, the glossiness and the transparency of the obtained raw sheet 2 may be lowered.

The second cooling roller 112 is disposed such that the base layer 2A and the surface layers 2B melt-extruded from the T-dies 102 are interposed between the first and second cooling rollers 111 and 112 via the metallic cooling endless belt 115 made of stainless steel or the like.

The cooling endless belt 115 is an endless belt member made of, for instance, stainless steel, carbon steel or titanium alloy. The cooling endless belt 115 is wrapped around the first cooling roller 111, the third cooling roller 113 and the fourth cooling roller 114. An outer circumference (i.e. a surface to be in contact with the base layer 2A and the surface layers 2B melt-extruded from the T-dies 102) of the cooling endless belt 115 is mirror-finished to provide a surface roughness (Rmax) of 0.3 $\mu$m or less.

It should be noted that each of the third and fourth cooling rollers 113 and 114 can be provided therein with a cooler (not shown) such as a water-cooling cooler so that the temperature of the cooling endless belt 115 is adjustable.

The cooling-water-spraying nozzle 116 is provided at a vertically lower side of the second cooling roller 112 to spray a cooling water 116A onto a back surface of the cooling endless belt 115. By spraying the cooling water 116A onto the cooling endless belt 115 through the cooling-water-spraying nozzle 116, not only the endless belt 115 is rapidly cooled, but also the base layer 2A and the surface layers 2B, which are sheet-pressed by the first and second cooling rollers 111 and 112, can be rapidly cooled.

The water bath 117, which is formed in a box having an open upper surface, is provided so as to entirely cover a lower surface of the second cooling roller 112. The water bath 117 collects the cooling water 116A sprayed onto the back surface of the cooling endless belt 115. A drainage port 117B for discharging the collected water 117A from a lower side of the water bath 117 is provided to the water bath 117.

The water absorption roller 118 is disposed on a side of the second cooling roller 112 near the third cooling roller 113 to be in contact with the cooling endless belt 115. The water absorption roller 118 removes the residue of the cooling water adhered on the back surface of the cooling endless belt 115.

The peeling roller 119 is disposed to guide the base layer 2A and the surface layers 2B to the third cooling roller 113 and the cooling endless belt 115. After being cooled, the raw sheet 2 is peeled off from the cooling endless belt 115 by the peeling roller 119.

Although the peeling roller 119 may be disposed to press the raw sheet 2 against the third cooling roller 113, the peeling roller 119 is preferably disposed apart from the third cooling roller 113 as shown, thereby avoiding pressing the raw sheet 2.

The thermal treatment equipment 20 of the manufacturing device 1 includes a preheater 210, a thermal treatment equipment body 220 and a cooler 230.

The preheater 210 heats (preheats) the raw sheet 2 molded through the raw sheet molding machine 10. As shown in Fig. 1, the preheater 210 includes a first preheat roller 211, a second preheat roller 212 and a third preheat roller 213. The first preheat roller 211, the second preheat roller 212 and the third preheat roller 213 are made of a material with excellent thermal conductivity such as metal.

The first preheat roller 211, the second preheat roller 212 and the third preheat roller 213 are each provided with a temperature adjuster (not shown) such as a steam heater to control the surface temperature thereof. It is not necessary for the temperature adjuster to be provided directly on each of the preheat rollers 211 to 213, but the temperature adjuster may be provided as an independent roller dedicated for preheating or as an external preheater adapted to preheat the preheat rollers.

It should be noted that the preheater 210 is not limited to the arrangement with three preheat rollers 211 to 213, but the preheater 210 may be provided by one or more preheat rollers or by an endless belt as long as the raw sheet 2 can be preheated.

The thermal treatment equipment body 220 of the thermal treatment equipment 20 runs while heating the raw sheet 2 preheated by the preheater 210. The thermal treatment equipment body 220 includes a first heating roller 221, a second heating roller 222, a third heating roller 223, a fourth heating roller 224, a rubber roller 225 (pressure roller), a guide roller 226, a metallic heating endless belt 227 and a drive mechanism (not shown).

The first heating roller 221, the second heating roller 222, the third heating roller 223, the fourth heating roller 224 and the guide roller 226 are made of a material with excellent thermal conductivity such as metal. The first heating roller 221, the second heating roller 222, the third heating roller 223 and the fourth heating roller 224 are preferably large in diameter in view of durability of the metallic heating endless belt 227. Practically, it is preferable that the diameter of the heating rollers is designed to be in a range from 100 mm to 1500 mm.

The first heating roller 221, the second heating roller 222, the third heating roller 223 and the fourth heating roller 224 are each provided with a temperature adjuster (not shown) such as a steam heater to control the surface temperature thereof. It is not necessary for the temperature adjuster to be provided directly on each of the heating rollers 221 to 224, but the temperature adjuster may be provided as an independent roller dedicated for heating or as an external heater that heats the heating rollers.

A heating condition is determined such that the raw sheet 2 is heated to be a temperature in a range from the crystallization point to the melting point of the raw sheet 2. For instance, when the raw sheet 2 includes the aforementioned propylene resin and a metallocene ethylene-alpha-olefin copolymer, the heating condition is determined such that the surface temperature of the raw sheet 2 is 120 degrees C or more and less than the melting point.

The drive mechanism is connected to at least one of the first heating roller 221, the second heating roller 222 and the third heating roller 223. The drive mechanism is driven to rotate the at least one of the first heating roller 221, the second heating roller 222 and the third heating roller 223 to which the drive mechanism is connected.

The heating endless belt 227 is provided by an endless belt member made of, for instance, stainless steel, carbon steel and titanium alloy. Though the thickness can be determined as desired, the thickness is preferably 0.3 mm or more in terms of strength thereof.

The heating endless belt 227 is wrapped around the first heating roller 221, the second heating roller 222 and the third heating roller 223 and is rotated by driving a drive mechanism. It should be noted that the drive mechanism is controllably driven so that the travel speed of the heating endless belt 227 becomes substantially equal to the travel speed of the cooling endless belt 115 rotated by the drive mechanism of the aforementioned cooling press machine 110.

The fourth heating roller 224 is disposed such that an outer circumference of the fourth heating roller 224 faces an outer circumference of the heating endless belt 227 and intersects with an outer tangent of the first heating roller 221 and the second heating roller 222. The fourth heating roller 224 is rotatably disposed such that the raw sheet 2 preheated by the preheater 210 can be introduced between the outer circumference of the fourth heating roller 224 and the outer circumference of the heating endless belt 227.

An outer circumference of the rubber roller 225 faces the outer circumference of the heating endless belt 227 at a position wrapped around the first heating roller 221.

At least the outer circumference of the rubber roller 225 is covered with a cushion material (not shown). The cushion material is made of the same material as that of the second cooling roller 112 of the cooling press machine 110. Almost the entire outer circumference of the rubber roller 225 may be covered with the cushion material, or, alternatively, the rubber roller 225 may be substantially entirely provided by the cushion material.

The rubber roller 225 presses the raw sheet 2 fed from the preheater 210 onto the outer circumference of the heating endless belt 227 so that the raw sheet 2 is thermally in a close contact therewith. In other words, the rubber roller 225 is in contact with the first heating roller 221 through the preheated raw sheet 2 and the heating endless belt 227. The raw sheet 2 runs along with the heating endless belt 227 while being in a close contact therewith and is subsequently pressed and held by the fourth heating roller 224.

The guide roller 226 is rotatably disposed with an outer circumference thereof facing the outer circumference of the heating endless belt 227 to guide the sheet-shaped transparent recycled sheet 3 heated and pressed between the heating endless belt 227 and the fourth heating roller 224. Specifically, the guide roller 226 is disposed downstream in a manufacturing direction (i.e. downstream in a transfer direction of the transparent recycled sheet 3) relative to the fourth heating roller 224 via the second heating roller 222 disposed downstream in the manufacturing direction.

Thus, the guide roller 226 guides the transparent recycled sheet 3 obtained by heating and pressing between the heating endless belt 227 and the fourth heating roller 224 such that the transparent recycled sheet 3 is peeled off from the outer circumference of the heating endless belt 227 after being peeled off from the outer circumference of the fourth heating roller 224.

The cooler 230 of the thermal treatment equipment 20 cools the transparent recycled sheet 3 thermally treated by the thermal treatment equipment body 220. The cooler 230 includes a first cooling guide roller 231, a second cooling guide roller 232 and a pair of guide rollers 233. The first cooling guide roller 231, the second cooling guide roller 232 and the pair of guide rollers 233 are provided by a material with excellent thermal conductivity such as metal.

The first cooling guide roller 231, the second cooling guide roller 232 and the pair of guide rollers 233 are substantially linearly disposed so that the transparent recycled sheet 3 having been thermally treated by the thermal treatment equipment body 220 runs windingly along the rollers. The first cooling guide roller 231 and the second cooling guide roller 232 are each provided with a temperature adjuster (not shown) such as a steam heater to control the temperature of the surface thereof. It is not necessary for the temperature adjuster to be provided directly on each of the cooling rollers 231 and 232, but the temperature adjuster may be provided as an independent roller dedicated for cooling or as an external cooler that cools the cooling rollers.

The pair of guide rollers 233 are located on the downstream in the manufacturing direction relative to the second cooling guide roller 232. The guide rollers 233 are vertically juxtaposed (i.e. provided in a direction intersecting with the transfer direction of the transparent recycled sheet 3) so that respective outer circumferences of the guide rollers 233 face with each other with the cooled transparent recycled sheet 3 interposed therebetween.

It should be noted that the cooler 230 is not limited to the arrangement having the first cooling guide roller 231, the second cooling guide roller 232 and the pair of guide rollers 233, but the cooler 230 may be provided by one or more rollers or by one or more endless belts as long as the transparent recycled sheet 3 can be cooled.

Arrangement of Raw Sheet

Next, an arrangement of the raw sheet 2 used for manufacturing the transparent recycled sheet 3 by the manufacturing device 1 will be described below. The raw sheet 2 has, for instance, a trilaminar structure of two components in which the surface layers 2B are provided on both sides of the sheet-shaped base layer 2A.

The base layer 2A is made of a mixed resin of a recycled resin, a virgin resin and a metallocene ethylene-alpha-olefin copolymer.

A crystalline resin as the virgin resin is exemplified by a propylene resin in the exemplary embodiment. Preferably, the isotactic pentad fraction of the propylene resin is in a range from 85% to 99% and the MFR of the propylene resin is in a range from 0.5 g/10 min to 5 g/10 min. Further preferably, the isotactic pentad fraction of the propylene resin is in a range from 90% to 99% and the MFR of the propylene resin is in a range from 2 g/10 min to 4 g/10 min.

Herein, the isotactic pentad fraction is of a pentad unit (an isotactic bonding of five continuous propylene monomers) contained in a polypropylene molecule chain of a resin composition. A measuring method of the fraction is described in, for instance, "Macromolecules" Vol. 8, p. 687 (1975). The fraction is measured by using $^{13}$C-NMR.

MFR may be measured at a measurement temperature of 230 degrees C and a load of 2.16 Kg in accordance with JIS K 7210.

When the isotactic pentad fraction of the propylene resin is lower than 85%, the rigidity of the sheet (i.e., a molded article) may become insufficient. On the other hand, when the isotactic pentad fraction of the propylene resin exceeds 99%, the transparency may be lowered. Thus, the isotactic pentad fraction of the propylene resin is preferably set in a range from 85% to 99%.

When MFR of the propylene resin is lower than 0.5 g/10 min, a shear stress at a die slip during extrusion is increased, thereby promoting crystallization and lowering the transparency. On the other hand, when the MFR of the propylene resin is greater than 5 g/10 min, a draw-down during thermal molding is increased, thereby deteriorating moldability. Thus, the MFR of the propylene resin is preferably set in a range from 0.5 g/10 min to 5 g/10 min.

The metallocene ethylene-alpha-olefin copolymer is manufactured by using a metallocene catalyst. The MFR of the metallocene ethylene-alpha-olefin copolymer is in a range from 0.5 g/10 min to 6 g/10 min. The density of the metallocene ethylene-alpha-olefin copolymer is preferably in a range from 898 kg/m$^3$ to 913 kg/m$^3$.

MFR can be measured at a measurement temperature of 190 degrees C and a load of 2.16 kgf in accordance with JIS K 7210. The density can be measured at a test temperature of 23 degrees C in accordance with a "measuring method of density and specific weight of plastic-nonfoamed plastic" defined in JIS K 7112.

The metallocene ethylene-alpha-olefin copolymer is preferably a material having approximately the same refractive index as the propylene resin, especially preferably a linear low-density polyethylene. When the density of the metallocene ethylene-alpha-olefin copolymer is smaller than 898 kg/m$^3$ or larger than 913 kg/m$^3$, the refractive index of the metallocene ethylene-alpha-olefin copolymer becomes incompatible with that of the propylene resin (i.e. matrix), so that light is greatly refracted at the interface between the propylene resin and the metallocene ethylene-alpha-olefin copolymer, thereby impairing the transparency. In other words, when the refractive indexes of the propylene resin and the metallocene ethylene-alpha-olefin copolymer are substantially the same, the transparency of the manufactured transparent recycled sheet 3 is improved.

When the MFR of the metallocene ethylene-alpha-olefin copolymer is smaller than 0.5 g/10 min, the metallocene ethylene-alpha-olefin copolymer becomes difficult to be dispersed in the propylene resin as a matrix, so that light is scattered due to the increased dispersion diameter of the metallocene ethylene-alpha-olefin copolymer, thereby impairing the transparency. On the other hand, when the MFR is larger than 6 g/10 min, the metallocene ethylene-alpha-olefin copolymer becomes less compatible with the propylene resin as a matrix, so that the metallocene ethylene-alpha-olefin copolymer remains as large particles being unable to be fully dispersed. In the above state, since the light is scattered due to the particles of the metallocene ethylene-alpha-olefin copolymer, the transparency is likely to be impaired.

The content of the metallocene ethylene-alpha-olefin copolymer is preferably in a range from 0.1 mass% to 20 mass% of the raw sheet 2, more preferably from 0.5 mass% to 10 mass% of the raw sheet 2. When the content of the metallocene ethylene-alpha-olefin copolymer is in excess, the rigidity of the obtained raw sheet 2 may be lowered. On the other hand, when the content of the metallocene ethylene-alpha-olefin copolymer is insufficient, the metallocene ethylene-alpha-olefin copolymer becomes difficult to be dispersed in the propylene resin, so that the growth of spherulites cannot be sufficiently restrained and thus the transparency may be impaired.

The base layer 2A also includes the recycled resin in addition to the virgin resin and the metallocene ethylene-alpha-olefin copolymer.

In the exemplary embodiment, the raw sheet 2 and the transparent recycled sheet 3 are recovered to be used in a form of a recycled resin, which is obtained by crushing or tearing a multilayer sheet into fluff, the multilayer sheet including: the base layer being made of a virgin resin provided by a crystalline resin; and the surface layer being layered on at least one surface of the base layer, the surface layer being made of a virgin resin provided by a crystalline resin that has a larger MFR and a shorter relaxation time than those of the crystalline resin (virgin resin) of the base layer.

The density of the recycled resin in the base layer 2A can be increased as much as possible as long as the base layer 2A can be extruded, but a preferable ratio is 50 mass% or less. When the ratio exceeds 50 mass%, the yellow tinge of the raw sheet 2 or the transparent recycled sheet 3 increases, which deteriorates the appearance of the sheet.

The recycled resin contains a low-viscosity crystalline resin (propylene resin) originating from the surface layer 2B. The ratio of this low-viscosity crystalline resin is preferably 0.1 mass% or more of the raw sheet 2. When the ratio is less than 0.1 mass%, the transparency is maintained with less efficiency even though the metallocene ethylene-alpha-olefin copolymer is added.

The surface layer 2B is made of a crystalline resin that has a larger MFR and a shorter relaxation time than those of the crystalline resin (virgin resin) used for the base layer 2A. In the exemplary embodiment, the crystalline resin is exemplified by a propylene resin.

Specifically, the MFR of the propylene resin used for the surface layer 2B is preferably 1.5 times or more larger than the MFR of the propylene resin (virgin resin) used for the base layer 2A. When the MFR of the propylene resin of the surface layer 2B is less than 1.5 times, improvement in transparency is small. The propylene resin for forming the surface layer 2B has a larger MFR and a shorter relaxation time than those of the propylene resin (virgin resin) contained in the base layer. The relaxation time of the propylene resin of the surface layer 2B is preferably 80% or less of that of the propylene resin (virgin resin) used for the base layer 2A. When the relaxation time of the surface layer 2B exceeds 80%, improvement in transparency is small.

MFR may be measured at a measurement temperature of 230 degrees C and a load of 2.16 kgf in accordance with JIS K 7210.

The relaxation time ($\tau$) was obtained as a relaxation time at an angular frequency $\omega$ = 0.01 rad/sec when frequency dispersion was measured at a temperature of 175 degrees C using a rotational rheometer (manufactured by Rheometrics, Inc) having a cone plate of a 25-mm diameter and a cone angle of 0.1 radian (rad). Specifically, a complex modulus $G^*(\omega)$ of resin pellets was measured and defined by a relation ($\sigma^*/\gamma^*$) between stress $\sigma^*$ and distortion $\gamma^*$ as shown in the following formula (1). The relaxation time $\tau$ was obtained by the following formula (2).

$$G^*(i\omega) = \sigma^*/\gamma^* = G'(\omega) + IG''(\omega)\ldots(1)$$

$$\tau(\omega) = G'(\omega)/(\omega G''(\omega))\ldots(2)$$

In the formulae, G' represents a storage modulus and G" represents a loss modulus.

The relaxation time ($\tau$) will be described below.

After an external force is applied on a substance system in an equilibrium to bring the substance system into another equilibrium or a steady state, the external force is removed, which causes the substance system to return to the initial equilibrium because of an internal movement of the substance system. Such a phenomenon is referred to as a relaxation phenomenon. A characteristic time coefficient that is a standard required time for relaxation is referred to as a relaxation time. For polymer molding (e.g., extrusion molding), the melted polymers are flowed, in which molecular chains are drawn and arranged (oriented) in a flow direction. When the polymers finish flowing and begin to be cooled, no stress is applied on the molecules, so that the molecular chains begin to move to eventually orient in random directions (which is referred to as relaxation of molecular chains). The relaxation time is relevant to probability that the molecular chains oriented in an extrusion direction during the extrusion molding are returned to the random orientations. A short relaxation time shows that the molecular chains are easily returned to the random orientations.

Note that, although the raw sheet 2 in this exemplary embodiment has a trilaminar structure of two components, an arrangement of the raw sheet 2 is not limited to this. The raw sheet 2 may be formed by a single layer or by two layers in which the surface layer 2B is formed only on one side of the base layer 2A. The crystalline resin is not necessarily provided by a propylene resin. The raw sheet 2 and the transparent recycled sheet 3 of the exemplary embodiment are not necessarily used to make the recycled resin.

Manufacturing Method of Transparent Recycled Sheet

Next, an operation for manufacturing the transparent recycled sheet 3 by the manufacturing device 1 will be described.

Initially, the temperature of each of the outer circumferences of the cooling endless belt 115 and the third cooling roller 113 of the cooling press machine 110 of the raw sheet molding machine 10 is controlled by the temperature adjuster so that the temperature of each of the outer circumferences is kept in a range from a dew point of the melted resin 2C to 50 degrees C. When the temperature exceeds 50 degrees C, the transparency of the raw sheet 2 cannot be obtained and alpha crystals are increased to possibly make it difficult to thermally mold the raw sheet 2. Thus, the temperature is controlled to be 50 degrees C or lower, preferably 30 degrees C or lower. On the other hand, when the temperature is lower than the dew point, dew condensation may occur at the surface to cause water-drop spot on the sheet, thereby making uniform film-making difficult. Thus, the temperature is controlled to be the dew point or higher.

Further, in the thermal treatment equipment body 220 of the thermal treatment equipment 20, the temperature is controlled by the temperature adjuster so that the temperature of the outer circumference of the heating endless belt 227 or the fourth heating roller 224 is kept in a range from the crystallization temperature to the melting point of the raw sheet 2. In the preheater 210 of the thermal treatment equipment 20, the temperature is preferably controlled so that preheating is effected in a temperature range from 50 degrees C (i.e. a temperature to be cooled by the cooling press machine 110 of the raw sheet molding machine 10) to the crystallization temperature.

In this state, the melted resin 2C of each of the base layer 2A and the surface layer 2B is extruded from the T-die 102 of the T-die extruder 100 while being layered together into a sheet and is introduced into a nip between the outer circumferences of the rotating cooling endless belt 115 and the rotating second cooling roller 112 of the cooling press machine 110.

The introduced melted resin 2C layered in a sheet, i.e., the base layer 2A and the surface layer 2B, is sheet-pressed and simultaneously rapidly cooled.

During the rapid cooling, the elastic member 111A is elastically deformed to be compressed due to the pressing force applied between the first cooling roller 111 and the second cooling roller 112. Then, the melted resin 2C is held together with the cooling endless belt 115 to be sheet-pressed by a restoring force of the elastic member 111A at a section of the angle θ1 (see Fig. 2) from the center of the first cooling roller 111 and the second cooling roller 112.

A face pressure at this time is preferably in a range from 0.1 MPa to 20 MPa. When the face pressure falls below 0.1 MPa, air may be engulfed between the cooling endless belt 115/second cooling roller 112 and the melted resin 2C, causing appearance failure of the sheet. On the other hand, face pressure higher than 20 MPa is not preferable in terms of lifetime of the cooling endless belt 115. Thus, the face pressure for the sheet-pressing is set in a range from 0.1 MPa to 20 MPa.

Subsequently, the base layer 2A and the surface layer 2B sandwiched between the second cooling roller 112 and the cooling endless belt 115 are sheet-pressed by the second cooling roller 112 and the cooling endless belt 115 in an arc section corresponding to substantially the lower half of the second cooling roller 112. The base layer 2A and the surface layer 2B are further rapidly cooled by spraying the cooling water 116A onto the back surface of the cooling endless belt 115 from the cooling-water spraying nozzle 116.

A face pressure at this time is preferably set in a range from 0.01 MPa to 0.5 MPa. A temperature of the cooling water 116A is preferably set in a range from 0 degrees C to 30 degrees C. The sprayed cooling water 116A is collected in the water bath 117 while the collected water 117A is discharged from the drainage port 117B.

When the face pressure is lower than 0.01 MPa, it is difficult to control the winding movement of the cooling endless belt 115 and stable production may be impaired. On the other hand, the face pressure higher than 0.5 MPa is not preferable in terms of lifetime because the tension applied on the cooling endless belt 115 is increased.

After the base layer 2A and the surface layer 2B are sheet-pressed between the second cooling roller 112 and the cooling endless belt 115 and are cooled, the base layer 2A and the surface layer 2B in close contact with the cooling endless belt 115 are transferred onto the third cooling roller 113 as the endless belt 115 is rotated. The base layer 2A and the surface layer 2B are guided by the peeling roller 119 and rapidly cooled by the third cooling roller 113 via the cooling endless belt 115.

The water attached on the back surface of the cooling endless belt 115 is removed by the water absorption roller 118 provided between the second cooling roller 112 and the third cooling roller 113.

The base layer 2A and the surface layer 2B being cooled by the third cooling roller 113 are peeled off from the cooling endless belt 115 by the peeling roller 119 to provide the raw sheet 2.

An internal haze of the obtained raw sheet 2 is 20% or less and a surface roughness Rmax of at least one surface of the raw sheet 2 is Rmax = 0.5 μm or less. In other words, it is preferable that the cooling press machine 110 performs the rapid cooling and sheet-pressing under a condition capable obtaining the raw sheet 2 having an internal haze of 20% or less and a surface roughness Rmax of 0.5 μm or less on at least one surface of the raw sheet 2.

The haze is calculated according to the following formula (3) in accordance with JIS K 7105 using a ratio between a total light transmissivity (Tt) representing the total amount of transmitted light among light irradiated on the raw sheet 2 and a diffused light transmissivity (Td) representing transmitted light among light diffused by the raw sheet 2. The total light transmissivity (Tt) is the sum of a parallel light transmissivity (Tp) representing transmitted light coaxially with incident light and the diffused light transmissivity (Td).

$$\text{Haze (H)} = (\text{Td}/\text{Tt}) \times 100 \ldots (3)$$

The internal haze refers to the haze measured after applying silicone on the surface of the sheet in order to measure the transparency of the inside of the sheet without being influenced by the surface roughness of the sheet. When the value of the internal haze is larger than 20%, the internal haze may remain high even after heating and sheet-pressing by the thermal treatment equipment body 220 in the later stage, so that the transparent recycled sheet 3 with a high transparency may not be obtained. On the other hand, when the surface roughness Rmax is larger than 0.5 μm,

air may be engulfed when being thermally adhered onto the fourth heating roller 224 and the heating endless belt 227 of the thermal treatment equipment body 220 in the later stage, thereby generating a so-called blister. Thus, it is preferable to form the raw sheet 2 such that the internal haze is 20% or less and the surface roughness Rmax is 0.5 $\mu$m or less.

Subsequently, the raw sheet 2 molded by the cooling press machine 110 is wrapped around the outer circumferences of the first preheat roller 211, the second preheat roller 212 and the third preheat roller 213 of the preheater 210 to be transferred while being preheated.

Then, the raw sheet 2 preheated by the preheater 210 is introduced into the nip between the outer circumferences of the rubber roller 225 and the heating endless belt 227 of the thermal treatment equipment body 220. The introduced raw sheet 2 is sheet-pressed onto the outer circumference of the heating endless belt 227 by the rubber roller 225 so that the raw sheet 2 is thermally adhered thereto. The thermally adhered raw sheet 2 is transferred together with the rotating heating endless belt 227 to be introduced into between the outer circumferences of the heating endless belt 227 and the fourth heating roller 224. The introduced raw sheet 2 is sheet-pressed between the fourth heating roller 224 that carries the raw sheet 2 and the heating endless belt 227 on which a tension is applied by the fourth heating roller 224.

The heating temperature during the thermal treatment of the raw sheet 2 is in a range from crystallization temperature to the melting point of the raw sheet 2. For instance, when the raw sheet 2 is provided by the aforementioned propylene resin and metallocene ethylene-alpha-olefin copolymer, the heating condition of the raw sheet 2 is determined such that the surface temperature of the raw sheet 2 becomes 120 degrees C or more and less than the melting point. The face pressure during the thermal treatment is suitably determined in accordance with the shape of the molded product.

When the temperature falls below the crystallization temperature of the raw sheet 2, the thermal treatment is insufficiently performed on the raw sheet 2. On the other hand, when the temperature is higher than the melting point of the raw sheet 2, a higher-order structure obtained by the rapid cooling by the cooling press machine 110 is destroyed, so that it is likely that the sheet gets cloudy and transparency is impaired.

Subsequently, the raw sheet 2 is peeled off from the outer circumference of the fourth heating roller 224 and is transferred and heated while being adhered on the heating endless belt 227. The heated raw sheet 2 is peeled off from the heating endless belt 227 being guided by the guide roller 226 to be fed as the sheet-shaped transparent recycled sheet 3.

The obtained transparent recycled sheet 3 is wrapped around the outer circumferences of the first cooling guide roller 231 and the second cooling guide roller 232 of the cooler 230 to be windingly transferred and cooled, and is supplied through the nip between the pair of guide rollers 233.

The transparent recycled sheet 3 (supplied product) is wound by, for instance, a winder (not shown).

The total thickness of the transparent recycled sheet 3 obtained by the above manufacturing method is preferably in a range from 100 $\mu$m to 800 $\mu$m, more preferably from 160 $\mu$m to 500 $\mu$m. When the total thickness of the transparent recycled sheet 3 is less than 100 $\mu$m, since the rapid cooling effect by the cooling rollers 111, 112, 113 and 114 of the cooling press machine 110 is sufficiently exhibited, lamination is not necessary for obtaining transparency. On the other hand, when the total thickness of the transparent recycled sheet 3 exceeds 800 $\mu$m, rapid cooling through conduction of heat cannot be expected, so that advantages of lamination cannot be obtained.

Trimmed pieces of the obtained transparent recycled sheet 3 and waste of the sheet generated during a manufacturing process (e.g., when the operation is started or stopped) are crushed or torn into fluff through a crusher (not shown) to be used as the recycled resin for the base layer (recovered layer) 2A. Incidentally, the raw sheet 2 may be partly torn into fluff as the recycled resin before being subjected to the thermal treatment.


Advantages of Exemplary Embodiment


In the above exemplary embodiment, the base layer 2A is formed of the mixed resin of the virgin resin, the recycled resin and the metallocene ethylene-alpha-olefin copolymer and both surfaces of the base layer 2A are each provided with the surface layer 2B formed of a crystalline resin (a propylene resin) having a larger melt flow rate and a shorter relaxation time than those of a crystalline resin (a propylene resin) in the virgin resin.

With the metallocene ethylene-alpha-olefin copolymer mixed in the base layer 2A, even when the multilayer sheet including the base layer 2A and the surface layers 2B (i.e., the raw sheet 2 or the transparent recycled sheet 3) is recycled to be mixed to form the base layer (recovered layer) 2A, it is possible to prevent generation of huge spherulites resulting from the low viscosity of the surface layers 2B in the recycled resin. As a result, light is less scattered due to the spherulites, so that the transparency can be maintained even when the multilayer sheet is recycled.

The material resins of the base layer 2A and the surface layers 2B are melt-extruded and are cooled after being layered into a sheet to form the raw sheet 2. Subsequently, the raw sheet 2 is thermally treated at a temperature in a range from the crystallization temperature to the melting point. In this manner, the higher-order structure in the raw sheet 2 with excellent crystallization degree obtained by the cooling is kept from being destroyed, so that the transparency is not impaired. Further, the transparent recycled sheet 3 can have a high transparency and is capable of being favorably molded into a sheet-shape.

It is preferable that the virgin resin used for the base layer 2A is provided by 80 mass% to 99.5 mass% of a propylene resin having an isotactic pentad fraction of 85% to 99% and an MFR of 0.5 g/10 min to 5 g/10 min.

It is preferable that the base layer 2A includes 0.5 mass% to 20 mass% of a metallocene ethylene-alpha-olefin copolymer having a density from 898 kg/m$^3$ to 913 kg/m$^3$ and an MFR from 0.5 g/10 min to 6 g/10 min, the metallocene ethylene-alpha-olefin copolymer being prepared using a metallocene catalyst. By specifying the ranges as the above, the refractive indexes of the propylene resin and the metallocene ethylene-alpha-olefin copolymer in the base layer 2A can be substantially equalized with each other, so that the transparency can be maintained irrespective of recycling.

The raw sheet 2 has a trilaminar structure of two components in which the surface layers 2B are provided on both sides of the sheet-shaped base layer 2A.

With this arrangement, the stress applied when the base layer 2A is extruded can be relaxed as compared with an instance in which the surface layer 2B is provided on a single side of the base layer 2A, so that the residual stress can be further reduced and the transparency can be more easily maintained.

Further, the raw sheet 2 is produced by the cooling press machine 110 and is directly subjected to the thermal treatment by the thermal treatment equipment 20 in the manufacturing device 1 of this exemplary embodiment, thereby sequentially manufacturing the transparent recycled sheet 3. As a result, the desired highly transparent recycled sheet 3 can be efficiently produced.

Modifications

It should be understood that the above-described exemplary embodiment is merely an example of the embodiment of the invention and the scope of the invention is not limited by the above-described embodiment. Modifications and improvements that are compatible with the invention are included in the invention.

For instance, the raw sheet 2 may be rolled after being produced and the produced raw sheet 2 may be transferred to an independent thermal treatment equipment 20 to be thermally treated in order to produce the transparent recycled sheet 3. In other words, the structure of the manufacturing device 1 is not limited to the above exemplary embodiment.

The physicality, content and the like of the propylene resin and the metallocene ethylene-alpha-olefin copolymer may be determined according to the desired transparent recycled sheet 3 as long as the MFR of the surface layer 2B is larger and the relaxation time of the surface layer 2B is shorter than those of the base layer 2A of crystalline resin.

Further, though the raw sheet 2 includes the base layer 2A and the surface layers 2B provided on both sides of the base layer 2A in the above exemplary embodiment, the raw sheet 2 may have a double-layer structure in which the surface layer 2B is provided only on a single side of the base layer 2A. Alternatively, the raw sheet 2 may have a single-layer structure of the base layer 2A.

Examples

Examples 1-6, Comparative Examples 1-4

In the above exemplary embodiment, specific conditions of the manufacturing device and manufacturing method were set as follows. The material resins used in Examples and Comparative Examples are shown in Table 1 and layer structure of Examples and Comparative Examples are shown in Tables 2 to 4.

Table 1

| | Product Name (Manufacturer) | Melt Flow Rate [g/10min] | Relaxation Time [sec] | Pentad Fraction [%] | Density [kg/m$^3$] |
|---|---|---|---|---|---|
| Polypropylene Resin | Y-2005GP (Prime Polymer Co., Ltd.) | 20 | 0.26 | 93.5 | - |
| | E-103WA (Prime Polymer Co., Ltd.) | 3 | 12.2 | 92 | - |

(continued)

| | Product Name (Manufacturer) | Melt Flow Rate [g/10min] | Relaxation Time [sec] | Pentad Fraction [%] | Density [kg/m$^3$] |
|---|---|---|---|---|---|
| Metallocene Ethylene-α-Olefin Copolymer | KF370 (Japan Polyethylene Corporation) | 3.5 | - | - | 905 |
| | KF480 (Japan Polyethylene Corporation) | 4 | - | - | 918 |
| | KC570S (Japan Polyethylene Corporation) | 10.5 | - | - | 906 |

Using the material resins (for the base layer and the surface layer) shown in Table 1, a multilayer sheet was manufactured. After stabilizing the manufacturing of a virgin sheet, the trimmed pieces of the multilayer sheet and the waste of the sheet were torn into fluff and then a predetermined amount of the fluff was recycled for forming the base layer (recovered layer). Table 2 shows a layer structure obtained when the manufacturing of the recycled sheet was stabilized. Specific manufacturing conditions are as follows (no thermal treatment was effected).

Extruder:

·For the base layer (recovered layer); 65 mm in diameter
·For the surface layer; 50 mm in diameter

Width of the coat hanger die: 900 mm
(Lamination of the melted resin 2C by a feed-block method (trilaminar structure of surface layer/base layer/surface layer))
Surface roughness of the cooling roller: Rmax=0.1 μm
Cooling endless belt:

·Material; precipitation-hardened stainless steel
·Surface roughness; Rmax = 0.1 μm
·Width; 900 mm
·Length; 4600 mm
·Thickness; 0.6 mm

Temperature of the cooling endless belt 115 and the third cooling roller 113 between which the melted resin 2C was introduced to the cooling press machine 110: 20 degrees C
Drawing speed of the raw sheet 2: 4.5 m/min
Width of the raw sheet 2: 600mm

Table 2

| <Arrangement of Torn Fluff> | | |
|---|---|---|
| Surface Layer | | |
| Base Layer | | |
| Surface Layer | | |
| <Arrangement of Transparent Recycled Sheet> | | |
| | Resin | Layer Ratio |
| Surface Layer | Y-2005GP | 0.04 |

(continued)

| <Arrangement of Transparent Recycled Sheet> | | |
|---|---|---|
| | Resin | Layer Ratio |
| Base Layer | E-103WA +LLDPE +Fluff | 0.92 |
| Surface Layer | Y-2005GP | 0.04 |

The haze values (total haze, internal haze and external haze) of the obtained raw sheet 2 were measured. The hazes were measured using a haze measuring instrument (NDH-300A manufactured by NIPPON DENSHOKU INDUSTRIES CO., LTD.). After applying silicone oil on both sides of the sheet and interposing both the sides of the sheet between glass plates, the internal haze was measured with the above haze measuring instrument while eliminating exterior influences of the sheet. The measurements are shown in Tables 3 and 4.

Table 3

| | | Example 1 | Example 2 | Example 3 | Example 4 | Example 5 | Example 6 |
|---|---|---|---|---|---|---|---|
| Surface Layer | | Y-2005GP | Y-2005GP | Y-2005GP | Y-2005GP | Y-2005GP | Y-2005GP |
| Base Layer | PP | E-103WA 69mass% | E-103WA 69mass% | E-103WA 60mass% | E-103WA 69.7mass% | E-103WA 69.9mass% | E-103WA 29mass% |
| | Torn Fluff | 30mass% | 30mass% | 30mass% | 30mass% | 30mass% | 70mass% |
| | LLDPE | KF480 1mass% | KF370 1mass% | KF370 10mass% | KF370 0.3mass% | KF370 0.1 mass% | KF370 1mass% |
| Thickness [μm] | | 350 | 350 | 350 | 350 | 350 | 350 |
| Haze [%] | Total | 7.63 | 8.99 | 6.23 | 10.54 | 11.11 | 9.82 |
| | Internal | 6.55 | 8.44 | 5.74 | 10.01 | 10.82 | 9.13 |
| | External | 1.08 | 0.55 | 0.49 | 0.53 | 0.35 | 0.69 |
| Glossiness [%] | Front | 142 | 139 | 135 | 132 | 135 | 135 |
| | Back | 140 | 139 | 140 | 139 | 136 | 135 |

Table 4

| | | Comparative 1 | Comparative 2 | Comparative 3 | Comparative 4 |
|---|---|---|---|---|---|
| Surface Layer | | Y-2005GP | Y-2005GP | Y-2005GP | Y-2005GP |
| Base Layer | PP | E-103WA 100mass% | E-103WA 70mass% | E-1 03WA 30mass% | E-103WA 69mass% |
| | Torn Fluff | | 30mass% | 70mass% | 30mass% |
| | LLDPE | | | | KC570S 1 mass% |
| Thickness [μm] | | 350 | 350 | 350 | 350 |
| Haze [%] | Total | 11.45 | 15.12 | 18.70 | 32.8 |
| | Internal | 11.13 | 14.91 | 18.51 | 32.45 |
| | External | 0.32 | 0.21 | 0.19 | 0.35 |
| Glossiness [%] | Front | 137 | 127 | 127 | 113 |
| | Back | 135 | 133 | 126 | 115 |

Results

As is obvious from the results shown in Tables 3 and 4, the recycled sheets according to the exemplary embodiment (Examples 1 to 6), each of which included the base layer added with a predetermined metallocene ethylene-alpha-olefin copolymer, exhibited a transparency as excellent as a sheet of Comparative Example 1 (which was not a recycled sheet). In contrast, since the base layer was not added with the metallocene ethylene-alpha-olefin copolymer in Comparative Examples 2 and 3, the obtained recycled sheets had a lowered transparency. Although the base layer was added with the metallocene ethylene-alpha-olefin copolymer in Comparative Example 4, the obtained recycled sheet likewise had a lowered transparency because of the extremely high MFR thereof.

The sheet of Comparative Example 1 was not a recycled sheet but a virgin sheet including a base layer containing no metallocene ethylene-alpha-olefin copolymer. The base layer of the recycled sheet of Example 5 contained only a slight amount (0.1 mass%) of a predetermined metallocene ethylene-alpha-olefin copolymer. However, it is noteworthy that both external haze and internal haze of the recycled sheet were lowered (i.e., the transparency was improved) as compared with the virgin sheet of Comparative Example 1.

INDUSTRIAL APPLICABILITY

The invention is applicable to packaging of foods, medicines, cosmetics and the like as well as various applications requiring transparency.

EXPLANATION OF CODES

1       manufacturing device
2       raw sheet
2A      base layer
2B      surface layer
3       transparent recycled sheet
10      raw sheet molding machine
20      thermal treatment equipment

**Claims**

1.  A method of manufacturing a transparent recycled sheet using a multilayer sheet as a recycled resin, the multilayer sheet comprising a base layer and a surface layer being layered on each other and each comprising a crystalline resin, the method comprising:

    melt-extruding a mixed resin into a raw sheet, the mixed resin being prepared by mixing a virgin resin comprising the crystalline resin, the recycled resin and a metallocene ethylene-alpha-olefin copolymer having a melt flow rate of 0.5 g/10 min to 6 g/10 min; and
    cooling the raw sheet.

2.  The method of manufacturing the transparent recycled sheet according to claim 1, wherein
    the multilayer sheet is provided by layering the base layer and the surface layer,
    the base layer is formed of the virgin resin comprising the crystalline resin, and
    the surface layer is provided on at least one surface of the base layer and is formed of the virgin resin comprising the crystalline resin having a larger melt flow rate and a shorter relaxation time than a melt flow rate and a relaxation time of the crystalline resin of the virgin resin of the base layer.

3.  The method of manufacturing the transparent recycled sheet according to claim 1 or 2, wherein
    the transparent recycled sheet is used to form the base layer, and
    the surface layer comprising the crystalline resin is layered on the base layer.

4.  The method of manufacturing the transparent recycled sheet according to any one of claims 1 to 3, further comprising thermally treating the raw sheet at a temperature in a range from a crystallization temperature to a melting point.

5. The method of manufacturing the transparent recycled sheet according to any one of claims 1 to 4, wherein a content of the metallocene ethylene-alpha-olefin copolymer in the raw sheet is in a range from 0.1 mass% to 20 mass% of the raw sheet.

6. The method of manufacturing the transparent recycled sheet according to any one of claims 2 to 5, wherein the recycled resin in the raw sheet comprises the crystalline resin originating from the surface layer of the multilayer sheet at a content of 0.1 mass% or more of the raw sheet.

7. The method of manufacturing the transparent recycled sheet according to any one of claims 1 to 6, wherein the mixed resin is prepared by dry-blending a virgin resin pellet of the crystalline resin, the recycled resin provided by tearing the multilayer sheet into fluff, and a virgin resin pellet of the metallocene ethylene-alpha-olefin copolymer.

8. The method of manufacturing the transparent recycled sheet according to any one of claims 1 to 7, wherein the crystalline resin comprises a propylene resin.

9. The manufacturing method of the transparent recycled sheet according to any one of claims 1 to 8, wherein the metallocene ethylene-alpha-olefin copolymer comprises a linear low-density polyethylene.

10. A transparent recycled sheet comprising:

   a multilayer sheet in a form of a recycled resin, the multilayer sheet comprising a base layer and a surface layer each comprising a crystalline resin;
   a virgin resin comprising a crystalline resin; and
   a metallocene ethylene-alpha-olefin copolymer having a melt flow rate in a range from 0.5 g/10 min to 6 g/10 min.

11. The transparent recycled sheet according to claim 10, wherein
   the multilayer sheet is provided by layering the base layer and the surface layer,
   the base layer is formed of the virgin resin comprising the crystalline resin, and
   the surface layer is provided on at least one surface of the base layer and is formed of the virgin resin comprising the crystalline resin having a larger melt flow rate and a shorter relaxation time than a melt flow rate and a relaxation time of the crystalline resin of the virgin resin of the base layer.

12. The transparent recycled sheet according to claim 10 or 11, wherein
   the transparent recycled sheet is used to form the base layer, and
   the surface layer comprising the crystalline resin is layered on the base layer.

# FIG.1

# FIG.2

| INTERNATIONAL SEARCH REPORT | International application No. |
|---|---|
| | PCT/JP2012/057970 |

**A. CLASSIFICATION OF SUBJECT MATTER**
*B29C47/06*(2006.01)i, *B32B27/32*(2006.01)i, *B29K23/00*(2006.01)n, *B29L7/00* (2006.01)n, *B29L9/00*(2006.01)n

According to International Patent Classification (IPC) or to both national classification and IPC

**B. FIELDS SEARCHED**

Minimum documentation searched (classification system followed by classification symbols)
B29C47/00-47/96, B32B1/00-43/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2009-543941 A (Avery Dennison Corp.),<br>10 December 2009 (10.12.2009),<br>paragraphs [0002], [0013], [0025], [0037],<br>[0044], [0050] to [0052], [0064] to [0067];<br>fig. 2<br>& US 2008/0199647 A1   & EP 2043860 A<br>& WO 2008/011402 A1   & KR 10-2009-0029847 A<br>& CN 101489787 A   & AU 2007275336 A | 1,3-10,12<br>2,11 |
| X<br>A | JP 2001-158068 A (Nippon Paper Industries Co.,<br>Ltd.),<br>12 June 2001 (12.06.2001),<br>paragraphs [0008], [0035], [0037] to [0039],<br>[0076]<br>(Family: none) | 1,5-7,9-10<br>2-4,8,11-12 |

☐ Further documents are listed in the continuation of Box C.    ☐ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 18 June, 2012 (18.06.12) | 26 June, 2012 (26.06.12) |

| Name and mailing address of the ISA/<br>   Japanese Patent Office | Authorized officer |
|---|---|
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3725955 B

- JP 4237275 B

**Non-patent literature cited in the description**

- *Macromolecules,* 1975, vol. 8, 687